Europäisches Patentamt

European Patent Office

Office européen des brevets

(19)

(11) Publication number: 0 404 410
A1

## (12) EUROPEAN PATENT APPLICATION

(21) Application number: 90306305.5

(22) Date of filing: 08.06.90

(51) Int. Cl.⁵: C04B 41/87, C04B 41/50

(30) Priority: 19.06.89 US 368448

(43) Date of publication of application:
27.12.90 Bulletin 90/52

(84) Designated Contracting States:
DE FR GB

(71) Applicant: HITCO
13722 Harvard Place
Gardena, California 90249(US)

(72) Inventor: Klein, Keith
24065 Ocean Avenue No. 106
Torrance, California 90505(US)
Inventor: Schwartz, Ira C.
6415 Green Valley Circle, 315
Culver City, California 90230(US)
Inventor: Noche, orlando L.
14619 Spinning Avenue
Gardena, California 90249(US)

(74) Representative: Scott, Susan Margaret et al
BP INTERNATIONAL LIMITED Patents &
Agreements Division Chertsey Road
Sunbury-on-Thames Middlesex TW16
7LN(GB)

(54) Method for producing a thin oxidation resistant SiC coating on carbonaceous substrates.

(57) A spray slurry cementation process for controlling the thickness of a SiC conversion layer (A) on a carbonaceous substrate comprising spraying said substrate with a slurry pack mixture composition to a predetermined thickness, and heating said substrate to about 1590°C (2900°F) to about 1815°C (3300°F) for about 4 to about 16 hours such that said slurry pack mixture composition reacts with said substrate to form said conversion coating (A).

**FIG. 1**

A) SILICON CARBIDE CONVERSION COATING (0.25 MILS THICK).
B) PYROLYTIC CARBON SURFACE LAYER FROM CVD.
C) INHIBITED C/C COMPOSITE.

EP 0 404 410 A1

# METHOD FOR PRODUCING A THIN OXIDATION RESISTANT SiC COATING ON CARBONACEOUS SUBSTRATES

## FIELD OF THE INVENTION

The present invention relates to an improved method for imparting oxidation resistance to carbonaceous substrates by forming a SiC conversion layer by a spray slurry cementation process.

## BACKGROUND

Carbonaceous substrates, and more specifically carbon-carbon composites are widely used in the aerospace and aviation industries due to the physical and mechanical properties of such materials. The high strength-to-weight ratio of carbon-carbon composites provides weight savings to aircraft components. This characteristic, coupled with the mechanical strength, toughness and dimensional stability of carbon-carbon composites to temperatures in excess of 4000°F, makes these materials ideal for aerospace applications.

A potentially limiting characteristic of carbon-carbon composites is that such materials tend to rapidly oxidize at temperatures above 800°F in oxygen containing environments. The degradation of the material due to oxidation causes loss of mechanical and physical properties. This problem must be prevented in order for these materials to be effectively used for aerospace applications, such as turbine engine exhaust nozzles and the space shuttle leading edge, where temperatures often exceed 2000°F for extended periods of time.

One solution to the problem of carbonaceous substrate degradation at elevated temperatures is to coat the substrate surface with silicon carbide. A silicon carbide coating effectively protects the carbonaceous substrate from degradation by providing a barrier to oxygen diffusion. Coating the material with silicon carbide may be accomplished by pack cementation, chemical vapor deposition or other viable processing techniques. To form a silicon carbide coating by pack cementation, a carbonaceous substrate is placed in intimate contact with a silicon containing powder and heated to temperatures sufficient to cause a reaction which converts the substrate surface to silicon carbide.

Carbon-carbon substrates are typically prepared for pack cementation by surrounding the substrate with a reactive pack mixture in a graphite retort. The thickness of the reactive material surrounding each substrate depends on the size of the gap between the part's surface and the inner walls of the retort. The objective is to supply the retort with more than enough reactants to produce, on firing, a reasonably thick pack cementation coating (about 5-50 mils) at the carbon-carbon substrate surface.

U.S. Patent No. 4,585,675, which teaches a pack cementation silicon carbide coating for carbon-carbon substrates, discusses a hand tamped packing method and an alternative time saving process in which a slurry form of the reactive pack mixture is poured around the part in a graphite retort.

Thin silicon carbide conversion coatings, of less than 5 mils, are finding new applications in situations where the coating is to be used either as a thin base of adhesion for subsequent coatings or on very thin structures in which slight deviation of coating thickness can have a severe impact on mechanical properties.

In the current art, the total coating thickness has generally been controlled by adjusting the cementation time/temperatures schedules. By using shorter or reduced temperature heat cycles to limit cementation reactions, coating thicknesses as low as 5 mils have been fairly easily attained. However, excess amounts of reactants in the retort left by standard packing techniques make it difficult to achieve accurate and reproducible coatings thinner than 5 mils, even with shortened heat cycles. In applications where a very thin and uniform coating is a critical requirement, a method is needed to provide a more accurate control of coating thickness, preferably by limiting the reactive ingredients available for reaction.

This application provides an alternative to known packing techniques by strictly limiting the reactants supplied to the substrate's surface prior to cementation. The novel method disclosed herein involves applying a thin sprayed on layer(s) of pack mixture, from a slurry, onto the substrate. The risk of unintentionally forming thick or unevenly coated areas during cementation is significantly reduced since the pack reaction ceases once the reactants in the pack mixture layer are depleted. Coating thickness can be controlled by variations in the thickness of the applied pack mixture layer.

It is, therefore, one object of the present invention to provide a method suitable for application of a pack mixture to a carbonaceous substrate such that a thin uniform conversion coating is formed on the substrate surface.

It is another object of the invention to provide a method for controlling pack conversion thickness on thin substrates.

These and other objects of the present invention will become apparent to those skilled in the art in the description of the invention that follows and in the examples and claims appended hereto.

## SUMMARY OF THE INVENTION

The subject invention relates to a spray slurry cementation process for controlling the thickness of a SiC conversion layer on a carbonaceous substrate comprising spraying the substrate with a slurry pack mixture composition to a predetermined thickness, and heating the substrate such that the slurry pack mixture composition reacts with the substrate to form the conversion coating.

This invention further relates to a method for forming a thin bonding layer on a carbonaceous substrate comprising spraying the substrate with a slurry pack mixture composition to a predetermined thickness and heating the substrate such that the slurry pack mixture composition reacts with the substrate to form a thin bonding layer for alternative coating layers.

## BRIEF DESCRIPTION ON THE FIGURES

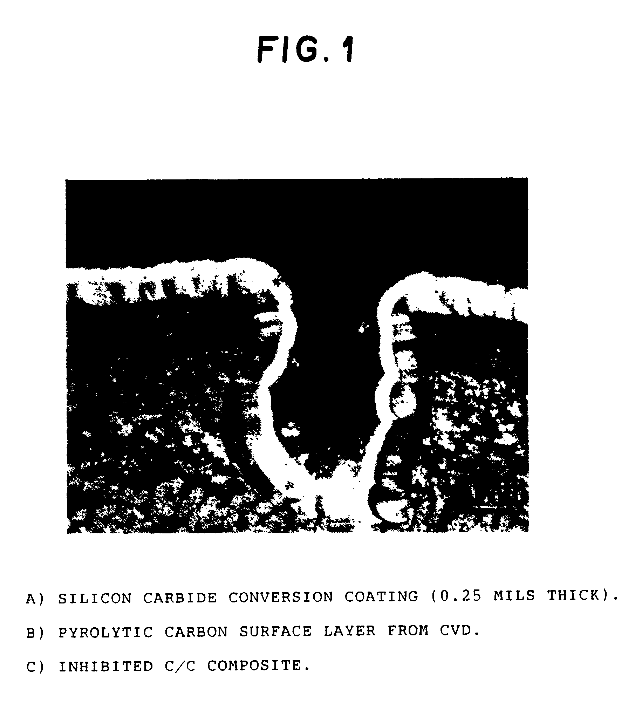

Figure 1 is a polarized light microscope photomicrograph of a cross section of a silicon carbide pack conversion coated carbon-carbon composite substrate.

## DESCRIPTION OF THE INVENTION

In accordance with this invention, there is provided a novel cementation spray slurry method for coating carbonaceous substrates to protect them from material degradation, including and most prevalently oxidation. The method taught herein provides a means for imparting a thin, uniform SiC conversion coating to carbonaceous substrates to enhance the resistance of the substrate to oxidation. This spray slurry cementation method may also be used to form a bonding layer on the substrate's surface for other types of coatings. The bonding layer provides a base of adhesion for alternative coatings that lack adhesion or are incompatible in direct contact with the carbonaceous substrate.

The phrase "spray slurry cementation" as used herein refers to a process for spray coating a carbonaceous substrate to a controlled thickness with a slurry containing a limited amount of reactants, which upon firing will react with the carbonaceous substrate to form a thin, primarily SiC coating. The extent of conversion is limited by the concentration of reactants present in the slurry and the total thickness of the applied slurry. The term "carbonaceous" as used herein includes carbon-carbon composites, which are fiber reinforced carbon matrix materials that may include oxidation inhibitors, as well as other carbon and/or graphite substrates.

Use of the novel spray slurry cementation process defined herein makes possible the conversion of the surface of a carbonaceous substrate to a thin SiC coating of uniform thickness. Tight control over the uniformity and thickness of the coating helps to minimize degradation of mechanical properties of the substrate, which may result from loss of substrate material to the conversion coating. The spray slurry cementation process allows control of the amount of conversion, thus limiting substrate degradation. This situation is extremely critical when working with very thin substrates, where it is imperative to minimize coating intrusion into the substrate.

The spray slurry process produces coatings of high density which inhibit oxygen diffusion into the substrate. The process further allows for the even coating of all exposed surfaces of the carbonaceous substrate and, as is typical of SiC pack cementation coatings, provides a chemical and mechanical bond to the substrate.

Finally, this process readily lends itself to use for applying a thin bonding layer for alternative coating layers. Such alternative layers may be used for any number of purposes, such as main oxidation barriers, spectral coatings, or erosion barriers. These alternative layers may consist of $B_4C$, SiC, or $Si_3N_4$, among others, and may be applied by chemical vapor deposition, sintering or other viable deposition techniques.

Pack mixtures which can be used to form SiC conversion coatings on carbonaceous substrates by the process disclosed herein usually include Si powder as the main ingredient and may contain other components such as SiC, B, $SiO_2$, etc. In order to render the pack mixture sprayable, it should be mixed with a binder-containing liquid carrier, for example a 0.4% aqueous solution of xanthan gum. Suitable liquids may include water and alcohols, among others. Binders should be preferably low charring and readily dissolvable in the chosen liquid.

pack mixture compositions which may be applied by this method include those disclosed in U.S.P.N. 4,585,675, 4,465,777 or 4,544,412. Conversion coatings other than SiC may also be attained using this process. Such coatings may consist of other carbides.

Prior to application of the spray slurry mixture to the carbonaceous substrate, it is usually preferable to coat or cover the substrate with pack release agent, which will aid in the removal of any pack material that remains after the cementation process has been completed. The need for a release agent is particularly important when using boron containing pack mixtures which tend to adhere to the substrate. Further, choice of an appropriate release agent tends to promote the vapor phase reaction, thus enhancing conversion.

The preferred release agent according to the subject invention is cork. The material is typically purchased with a -200 mesh particle size and a density of between 8 to 10 lbs./ft³, and is commercially available from the Maryland Cork Co., Inc. However, a variety of particle sizes and densities will be effective for the purpose stated herein. For ease of application, the powdered cork is mixed with a liquid carrier, such as 0.4% aqueous solution xanthan gum. The xanthan gum can be purchased as Kelzan-STM powder from Kelco Co.

Cork allows the reaction of the pack mixture composition with the substrate to proceed, then provides for the clean release of the pack mixture remaining after completion of the pack cementation process, without damaging the conversion coating, and consequently not exposing the substrate material. rne cork prevents pack sticking by converting to a very porous, low strength silicon carbide layer which is friable and therefore easily removable from the substrate surface.

Once the release agent has been applied to the substrate, the pack mixture may be applied over the release agent by the slurry spray coating process disclosed herein. The release agent-coated substrate is first sprayed with a thin coating of pack mixture. The substrate is then dried. This process may be repeated several times in order to attain a pack mixture coating of a desired thickness. The substrate may then be placed in a non-reactive retort filled with a course grade SiC powder such that the substrate is surrounded by the powder. Alternatively, the pack-coated substrate may be placed directly into a furnace without first encasing it in a retort. The spray coating technique readily lends itself to masking of the substrate in selected areas to prevent reaction with the pack mixture when such is desired.

The packed retort, or the pack-coated substrate without the retort, is placed in a furnace which is heated to a temperature ranging between about 2900°F and about 3300°F. This temperature is then held for a period of about 4-16 hours, depending on the reactivity of the substrate and the amount of coating pick-up desired.

Firing of the retort or retort-less part should take place in an inert atmosphere, preferably argon, at slightly above atmospheric pressure.

The furnace is then cooled in an inert atmosphere until it reaches room temperature, at which time the retort or pack-coated substrate can be removed. If a retort was used, the retort is opened and the substrate removed therefrom.

The conversion coated substrate is then removed from the spent pack mixture, and cleaned by rubbing the surface with an abrasive pad and rinsing it with an appropriate solvent, such as isopropyl alcohol.

The substrate now has a thin conversion coating of between 0.1 and 5 mils, the roughness of which is similar to the original substrate surface. The substrate may also now be treated to apply alternative coating layers.

## EXAMPLE

The following example demonstrates the formation of a thin SiC conversion coating through the slurry application of a pack mixture composition to a carbon-carbon substrate. It is to be understood that this example is utilized for purposes of illustration only, and is not intended, in any way, to be limitative of the present invention.

For purposes of this example, the substrate used was a carbon-carbon composite coupon. It was first cleaned to ensure that no foreign matter was present to interfere with the cementation process. This was accomplished by first scrubbing the part, then wiping it down with isopropyl alcohol and finally oven drying the coupon for 15-30 minutes at about 190°F.

The cleaned coupon was spray coated with a cork release agent according to the following procedure. The cork release agent, which consisted of a solution of 0.4% xanthan gum in distilled water and powdered cork, in a ratio of about 7:5.1, was prepared by vigorously mixing the cork solution in a paint shaker for 15 minutes. This solution was sprayed over the entire surface of the coupon with an air brush. The coating was then dried in an air oven at 190°F for about 15 to 30 minutes. The coating was approximately 5-10 mils thick. A second coating of cork was similarly applied, increasing the total thickness to 15 mils, to ensure that the entire substrate surface was covered.

The pack mixture was prepared by blending the following powders in a twin-shell mixer for 30 minutes: 59.5% SiC green (1200 grit), 5% amorphous B (about 1 micron), 35% Si (-200 mesh) and 0.5% SiO₂ (-325 mesh). A slurry was then prepared by mixing a solution of 0.4% xanthan gum in distilled water with the pack mixture formulation in a ratio of 1:1 by weight in a paint shaker for 15 minutes. The slurry was then sprayed over the dried cork release layer to a thickness of about 50 mils. Several spray applications were necessary to achieve this thickness.

The coupon was then dried at about 190°F in an air oven for about 30 to 45 minutes. It was then loosely packed in 240 grit SiC powder in a graphite retort. The retort was fired in a resistance heated furnace for 8 hours, at 3200°F, in an Argon atmosphere, at slightly above atmospheric pressure.

After the cementation process was completed, the 240 grit SiC powder was removed from around the slurry-encased coupon. The slurry had formed a hard shell around the coupon during firing. The coupon was easily removed by merely cracking off the slurry shell. Any remaining cork release agent residue was easily brushed from the coupon surface. The coupon was rubbed lightly with an abrasive pad and then cleaned with isopropyl alcohol. The coated coupon surface was smooth and did not appear roughened by the conversion process.

Figure 1 is a photomicrograph of a polished cross-section of the coupon. The SiC conversion coating, (designated by the letter A) obtained by the above process is thin (0.25 mils) and uniform. The pyrolytic carbon layer (letter B) beneath the conversion coating is an artifact of the carbon CVD densification process used to prepare the composite coupon. The pyrolytic carbon layer may or may not be present depending on the substrate densification used. The carbon-carbon substrate (letter C) is located beneath the pyrolytic carbon layer.

It is believed that any of the variables disclosed herein can readily be determined and controlled without departing from the spirit of the invention herein disclosed and described. Moreover, the scope of the invention shall include all modifications and variations that fall within that of the appended claims.

## Claims

1. A spray slurry cementation process for controlling the thickness of a SiC conversion layer on a carbonaceous substrate comprising spraying said substrate with a slurry pack mixture composition to a predetermined thickness, and heating said substrate to about 1590°C (2900°F) to about 1815°C (3300°F) for about 4 to about 16 hours such that said slurry pack mixture composition reacts with said substrate to form said conversion coating.

2. The process as in claim 1 wherein said SiC conversion layer is about 0.1 to about 5.0 mils thick.

3. The process as in claim 1 or claim 2 wherein said thickness of said conversion coating is limited by the concentration of reactants in said slurry pack mixture and the thickness of the slurry applied.

4. The process as in any one of claims 1 to 3, wherein said substrate is first coated with a release agent.

5. The process as in claim 4 wherein said release agent is powdered cork.

6. The process as in any one of claims 1 to 5, wherein said carbonaceous substrate is a carbon or graphite based material.

7. The process as in any one of claims 1 to 6, wherein said conversion coating provides a thin bonding layer for alternate coating layers.

8. The process as in any one of claims 1 to 7, wherein said slurry pack mixture contains Si as the main reactive ingredient.

9. The process as in any one of claims 1 to 8, wherein said slurry pack mixture contains Si, SiC, $SiO_2$ and B.

10. The process as in any one of claims 1 to 9, wherein said substrate is first masked such that said slurry pack mixture composition reacts only with the unmasked portion of said substrate.

# FIG. 1

A) SILICON CARBIDE CONVERSION COATING (0.25 MILS THICK).

B) PYROLYTIC CARBON SURFACE LAYER FROM CVD.

C) INHIBITED C/C COMPOSITE.

| | **DOCUMENTS CONSIDERED TO BE RELEVANT** | | EP 90306305.5 |

| Category | Citation of document with indication, where appropriate, of relevant passages | Relevant to claim | CLASSIFICATION OF THE APPLICATION (Int Cl⁵) |
|---|---|---|---|
| X | US - A - 4 830 919 (SHUFORD) * Claims * -- | 1,7 | C 04 B 41/87 C 04 B 41/50 |
| A | US - A - 4 476 178 (VELTRI et al.) * Totality * ---- | 1,4 | |

TECHNICAL FIELDS SEARCHED (Int Cl⁵)

C 04 B

The present search report has been drawn up for a ' claims

| Place of search | Date of completion of the search | Examiner |
|---|---|---|
| VIENNA | 17-09-1990 | BECK |